# EUROPEAN PATENT APPLICATION

(11) **EP 3 913 893 A1**
(43) Date of publication of application: **24.11.2021**
(21) Application number: 19911953.8
(22) Date of filing: 01.02.2019
(51) Int. Cl.: H04L 29/08

(54) **METHOD AND APPARATUS FOR PROCESSING DATA MESSAGE**

(30) Priority: 22.01.2019 CN 201910059565
(71) Applicant: Wangsu Science & Technology Co., Ltd., Shanghai 200030 (CN)
(72) Inventor: YANG, Guang, Shanghai 200030 (CN); MA, Tao, Shanghai 200030 (CN)
(74) Representative: De Arpe Tejero, Manuel
(86) International application number: PCT/CN2019/074461
(87) International publication number: WO 2020/151030

(57) **Abstract**

The present disclosure discloses a method and an apparatus for processing a data packet, and relates to the field of data transmission technology. The method includes: receiving, by a load balancing device, a target data packet, performing protocol stack processing on the target data packet based on a user-mode protocol stack, and determining a target protocol type of the target data packet; scheduling, by the load balancing device, the target data packet through a scheduling function corresponding to the target protocol type registered in a user-mode netfilter framework; and forwarding or responding to, by the load balancing device, the target data packet based on a result of the scheduling. By adopting the present disclosure, dependence of packet processing procedures on a kernel mode is reduced, processing frequency of packet copy is reduced, and thus processing performance consumption is saved for the load balancing device. Meanwhile, it is more convenient and simpler to perform maintenance processes such as upgrade and replacement on the processing procedures of the data packet.

## Description

### TECHNICAL FIELD

The present disclosure relates to the field of data transmission technology, and more particularly, to methods and apparatuses for processing a data packet.

### BACKGROUND

In a content delivery network (CDN) system, a server cluster is usually deployed to process four-layer service on CDN nodes, and a load balancing device with traffic scheduling and distribution functionalities operating at a transport layer is usually deployed on each of the CDN nodes, such that service traffic is evenly distributed in the server cluster.

As a general-purpose and abstract framework, a netfilter framework provides a whole set of management mechanisms for hook functions, and functionalities such as data packet filtering, network address translation (NAT) and connection tracking based on a protocol type may be loaded into the netfilter framework through the management mechanisms by means of KO plug-in. Currently, a Linux virtual server (LVS) generally may be deployed on the load balancing device to achieve load balance of service traffic in the server cluster. The LVS operates in a kernel mode, and may implement the above load balancing functionalities based on the netfilter framework of a kernel firewall by means of the KO plug-in.

In the process of implementing the present disclosure, the inventor found that there are at least the following problems in the technical solutions known to the inventor.

A processing logic of the LVS needs to transfer a packet to a kernel protocol stack. The resulting packet copy and a large number of processing procedures in the kernel protocol stack will occupy a large amount of processing performance of the entire load balancing device, which will greatly affect processing efficiency of service traffic. Meanwhile, because of great coupling between the LVS and the kernel, maintenance processes such as upgrade and replacement are complicated and cumbersome.

### SUMMARY

To solve problems in the technical solutions known to the inventor, embodiments of the present disclosure provide methods and apparatuses for processing a data packet. The technical solutions are described as follows.

In a first aspect, there is provided a method for processing a data packet, and the method includes:
receiving, by a load balancing device, a target data packet, performing protocol stack processing on the target data packet based on a user-mode protocol stack, and determining a target protocol type of the target data packet;
scheduling, by the load balancing device, the target data packet through a scheduling function corresponding to the target protocol type registered in a user-mode netfilter framework; and
forwarding or responding to, by the load balancing device, the target data packet based on a result of the scheduling.

Optionally, before the scheduling, by the load balancing device, the target data packet through a scheduling function corresponding to the target protocol type registered in a user-mode netfilter framework, the method also includes:
defending, by the load balancing device, the target data packet through a packet defending function corresponding to the target protocol type registered in the user-mode netfilter framework; and
discarding, by the load balancing device, the target data packet when detecting that the target data packet is a malicious packet.

Optionally, the scheduling the target data packet includes:
scheduling, by the load balancing device, the target data packet according to quintuple information of the target data packet when the target protocol type is a transmission control protocol (TCP) or a user datagram protocol (UDP); and
constructing, by the load balancing device, a response packet of the target data packet according to a preset pickup rule when the target protocol type is an Internet control message protocol (ICMP).

Optionally, the scheduling, by the load balancing device, the target data packet according to quintuple information of the target data packet includes:
searching, by the load balancing device, whether there exists locally a target session table entry corresponding to the quintuple information of the target data packet;
determining, by the load balancing device, a target back-end server recorded in the target session table entry as a scheduling destination device of the target data packet if the target session table entry exists; and
determining, by the load balancing device, the scheduling destination device of the target data packet according to a preset scheduling algorithm if the target session table entry does not exist.

Optionally, the determining, by the load balancing device, the scheduling destination device of the target data packet according to a preset scheduling algorithm includes:
if a target configuration service corresponding to the quintuple information of the target data packet exists in a locally prestored configuration service table, determining, by the load balancing device, the scheduling destination device of the target data packet according to the preset scheduling algorithm of the target configuration service, or otherwise discarding the target data packet.

Optionally, after the determining a target protocol type of the target data packet, the method also includes:
when the target protocol type is an address resolution protocol (ARP), resolving, by the load balancing device, the target data packet through an ARP processing function registered in the user-mode netfilter framework, and establishing a neighbor table entry and a routing table entry.

Optionally, after the determining a target protocol type of the target data packet, the method also includes:
inputting, by the load balancing device, the target data packet into a kernel protocol stack through a kernel interface (KNI) channel based on a sharing memory method in a circular queue if the target data packet is a non-service packet.

Optionally, the method further includes:
binding, by the load balancing device, a protocol stack address of the user-mode protocol stack to a packet receiving port, to process a data packet received from the packet receiving port through the user-mode protocol stack.

In a second aspect, there is provided an apparatus for processing a data packet, and the apparatus includes:
a packet receiving module, configured to receive a target data packet, perform protocol stack processing on the target data packet based on a user-mode protocol stack, and determine a target protocol type of the target data packet;
a load balancing module, configured to schedule the target data packet through a scheduling function corresponding to the target protocol type registered in a user-mode netfilter framework; and
a packet scheduling module, configured to forward or respond to the target data packet based on a result of the scheduling.

Optionally, the apparatus further includes a packet defending module, which is configured to:
defend the target data packet through a packet defending function corresponding to the target protocol type registered in the user-mode netfilter framework; and
discard the target data packet when detecting that the target data packet is a malicious packet.

Optionally, the load balancing module is specifically configured to:
schedule the target data packet according to quintuple information of the target data packet when the target protocol type is a transmission control protocol (TCP) or a user datagram protocol (UDP); and
construct a response packet of the target data packet according to a preset pickup rule when the target protocol type is an Internet control message protocol (ICMP).

Optionally, the load balancing module is specifically configured to:
search whether there exists locally a target session table entry corresponding to the quintuple information of the target data packet;
determine a target back-end server recorded in the target session table entry as a scheduling destination device of the target data packet if the target session table entry exists; and
determine the scheduling destination device of the target data packet according to a preset scheduling algorithm if the target session table entry does not exist.

Optionally, the load balancing module is specifically configured to:
if a target configuration service corresponding to the quintuple information of the target data packet exists in a locally prestored configuration service table, determine the scheduling destination device of the target data packet according to the preset scheduling algorithm of the target configuration service, or otherwise discard the target data packet.

Optionally, the load balancing module is further configured to:
when the target protocol type is an address resolution protocol (ARP), resolve the target data packet through an ARP processing function registered in the user-mode netfilter framework, and establish a neighbor table entry and a routing table entry.

Optionally, the apparatus further includes a kernel interaction module, which is configured to:
input the target data packet into a kernel protocol stack through a kernel interface (KNI) channel based on a sharing memory method in a circular queue if the target data packet is a non-service packet.

Optionally, the apparatus further includes a protocol stack binding module, which is configured to:
bind a protocol stack address of the user-mode protocol stack to a packet receiving port, to process a data packet received from the packet receiving port through the user-mode protocol stack.

In a third aspect, there is provided a load balancing device, which includes a processor and a memory. The memory stores at least one instruction, at least one program, a code set, or an instruction set. The at least one instruction, the at least one program, the code set or the instruction set is loaded and executed by the processor to implement the method for processing a data packet according to the first aspect.

In a fourth aspect, there is provided a computer-readable storage medium, wherein the storage medium stores at least one instruction, at least one program, a code set, or an instruction set. The at least one instruction, the at least one program, the code set, or the instruction set is loaded and executed by a processor to implement the method for processing a data packet according to the first aspect.

The technical solutions according to the embodiments of the present disclosure achieve the following beneficial effects:

In embodiments of the present disclosure, the load balancing device receives a target data packet, performs protocol stack processing on the target data packet based on a user-mode protocol stack, and determines a target protocol type of the target data packet; the load balancing device schedules the target data packet through a scheduling function corresponding to the target protocol type registered in a user-mode netfilter framework; and the load balancing device forwards or responds to the target data packet based on a scheduling result. In this way, the load balancing device implements processing of the data packet through the user-mode netfilter framework, which reduces dependence of packet processing procedures on a kernel mode, reduces processing frequency of packet copy. Meanwhile, it is more convenient and simpler to perform maintenance processes such as upgrade and replacement on the processing procedures of the data packet.

### BRIEF DESCRIPTION OF THE DRAWINGS

To describe the technical solutions of embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic diagram of a scenario for processing a data packet according to an embodiment of the present disclosure;
FIG. 2 is a flowchart of a method for processing a data packet according to an embodiment of the present disclosure;
FIG. 3 is a structure diagram of an apparatus for processing a data packet according to an embodiment of the present disclosure;
FIG. 4 is a structure diagram of an apparatus for processing a data packet according to another embodiment of the present disclosure;
FIG. 5 is a structure diagram of an apparatus for processing a data packet according to still another embodiment of the present disclosure;
FIG. 6 is a structure diagram of an apparatus for processing a data packet according to yet another embodiment of the present disclosure; and
FIG. 7 is a schematic structural diagram of a load balancing device according to an embodiment of the disclosure.

### DETAILED DESCRIPTION

To make the objectives, technical solutions and advantages of the present disclosure clearer, the embodiments of the present disclosure are further described below in detail with reference to the accompanying drawings.

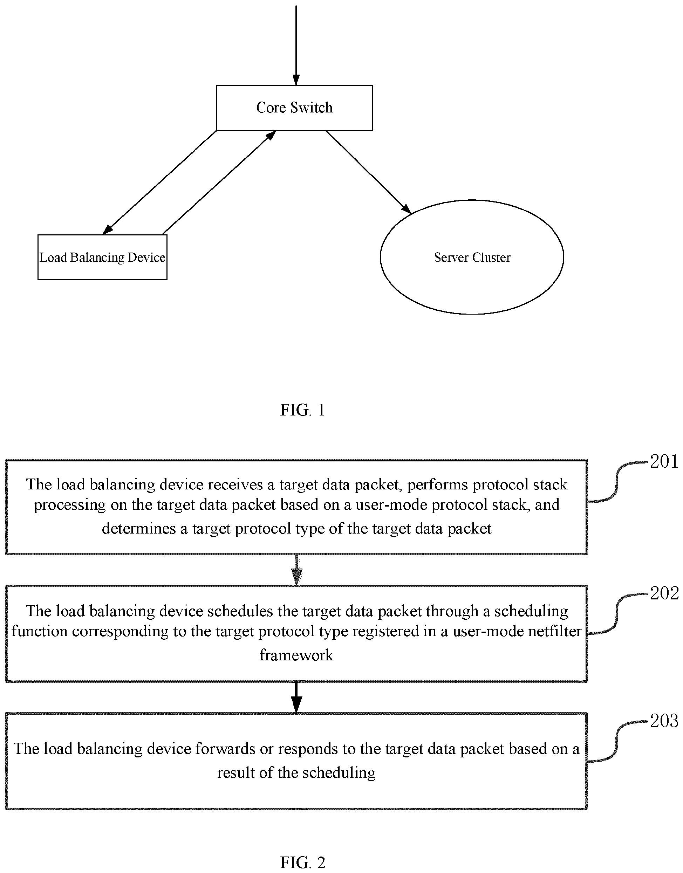

An embodiment of the present disclosure provides a method for processing a data packet. This method may be applied to a load balancing device, wherein the load balancing device may be a device configured to guide service traffic in a server cluster (such as a CDN system) and to achieve load balancing in the server cluster. As shown in FIG. 1, the load balancing device may be connected with a core switch of the server cluster. After reaching the core switch, a data packet may be first scheduled by the load balancing device, and then the scheduled data packet may be transmitted back to the server cluster by the core switch. The load balancing device may construct processing procedures for a data packet based on the Data Plane Development Kit (DPDK) technology, such that packet processing with high-performance can be implemented in a user mode. The above load balancing device may include a processor, a memory, and a transceiver. The processor may be configured to perform following processing procedures of the data packet. The memory may be configured to store data required for the following processing procedures and data generated in the following processing procedures. The transceiver may be configured to receive and transmit related data in the following processing procedures. In this embodiment, reference is made by taking an example where the server cluster is a back-end service cluster of each CDN node, and other clusters are similar to the server cluster, and will be described in detail if necessary.

Processing procedures as shown in FIG. 2 will be described in detail with reference to specific embodiments as follows.

In Step 201, the load balancing device receives a target data packet, performs protocol stack processing on the target data packet based on a user-mode protocol stack, and determines a target protocol type of the target data packet.

In implementation, after the target data packet reaches a core switch of a CDN node, the core switch of the CDN node may first transmit the target data packet to the load balancing device connected with the core switch based on a dynamic routing mechanism. In this way, the load balancing device may receive the target data packet transmitted from the core switch, then input the data packet into a preset user-mode protocol stack by using a packet reading/writing mechanism, such as a UserSpace I/O (UIO) technology that is a I/O technology running in the user space, and then the load balancing device may perform protocol stack processing on the target data packet through the user-mode protocol stack. Meanwhile, the load balancing device may view quintuple information of the target data packet and determine the target protocol type of the target data packet.

Optionally, the load balancing device may also process an Address Resolution Protocol (ARP) packet in a user mode. Correspondingly, after Step 201, there may be the following processing: when the target protocol type is the ARP, the load balancing device may resolve the target data packet through an ARP processing function registered in a user-mode netfilter framework, and establish a neighbor table entry and a routing table entry.

In implementation, when determining that the target protocol type of the target data packet is the ARP, the load balancing device may resolve the target data packet through the ARP processing function registered in the user-mode netfilter framework, add an ARP table entry according to the resolution result, and establish the neighbor table entry and the routing table entry to make preparation for forwarding the data packet in the user mode. Then, the load balancing device may process the resolved target data packet in a kernel mode based on a kernel protocol stack.

Optionally, the load balancing device may hand over a non-service packet through a kernel interface (KNI) channel to the kernel mode for processing. Correspondingly, after Step 201, there may be the following processing: if the target data packet is the non-service packet, the load balancing device may input the target data packet into the kernel protocol stack through the KNI channel based on a sharing memory method in a circular queue.

In implementation, after receiving the target data packet, the load balancing device may load the target data packet into the kernel mode through the KNI channel by means of the sharing memory method if the target data packet is the non-service packet. That is, the load balancing device inputs the target data packet into the kernel protocol stack. Specifically, the sharing memory here may be organized in the form of a circular queue, and implement the read and write processing of the data packet in the circular queue through a Read pointer and a Write pointer, respectively. Similarly, after the kernel protocol stack processes the target data packet, the processed target data packet may also be returned to the user mode through the KNI channel by means of the sharing memory method.

In Step 202, the load balancing device schedules the target data packet through a scheduling function corresponding to the target protocol type registered in the user-mode netfilter framework.

In implementation, the user-mode netfilter framework may be preconfigured into the load balancing device, and scheduling functions corresponding to multiple protocol types may be preregistered into the netfilter framework. After determining the target protocol type of the target data packet, the load balancing device may schedule the target data packet through the scheduling function corresponding to the target protocol type registered in the user-mode netfilter framework.

Optionally, the load balancing device may defend the received data packet before scheduling the data packet to prevent the back-end server cluster from being attacked by a malicious packet. Correspondingly, before Step 202, there may be the following processing: the load balancing device defends the target data packet through a packet defending function corresponding to the target protocol type registered in the user-mode netfilter framework, and discards the target data packet if detecting that the target data packet is the malicious packet.

In implementation, packet defending functions corresponding to different protocol types may be preregistered in the user-mode netfilter framework deployed on the load balancing device. Different packet defending functions are independent of each other and are registered in the form of plug-in. Dynamic loading and unloading of the packet defending functions are implemented in the netfilter framework through a hook function. The packet defending function may at least include a Transmission Control Protocol (TCP) defending function (which may further include an SYN FLOOD defending function, an ACK FLOOD defending function, and an HTTP FLOOD defending function), a User Datagram Protocol (UDP) defending function, and an Internet Control Message Protocol (ICMP) defending function. In this way, after determining the target protocol type of the target data packet, the load balancing device may first defend the target data packet through the packet defending function corresponding to the target protocol type registered in the user-mode netfilter framework. Specifically, the load balancing device may respectively perform detection and defending logic processing (such as packet features, protocol characteristics, and packet statistics) on the target data packet through the packet defending function, to complete distributed denial of service (DDoS) attack detection and defending processing. After the processing is completed, if detecting that the target data packet is a malicious packet, the load balancing device may discard the target data packet, and if the target data packet is a normal packet, the load balancing device may perform subsequent processing on the target data packet.

Optionally, protocol stack types of the data packet may mainly include a TCP packet, a UDP packet, and an ICMP packet. Correspondingly, the scheduling the target data packet in Step 202 may be specifically as follows. The load balancing device schedules the target data packet according to quintuple information of the target data packet when the target protocol type is the TCP or UDP, and the load balancing device constructs a response packet of the target data packet according to a preset pickup rule when the target protocol type is the ICMP

In implementation, when determining that the target protocol type of the target data packet is the TCP or UDP, the load balancing device may call a scheduling function corresponding to the TCP or UDP registered in the user-mode netfilter framework to perform the following processing. That is, the load balancing device may first obtain quintuple information (including a destination address/destination port/source address/source port/protocol type) of the target data packet, and then may schedule the target data packet according to the quintuple information of the target data packet. When the target protocol type of the target data packet is the ICMP, the load balancing device may call a scheduling function corresponding to the ICMP registered in the user-mode netfilter framework to directly construct the response packet of the target data packet according to the preset pickup rule.

Optionally, the scheduling the TCP packet or UDP packet may be performed in priority according to an existing session table entry. Correspondingly, the scheduling the target data packet according to the quintuple information may be specifically as follows. The load balancing device searches whether there exists locally a target session table entry corresponding to the quintuple information of the target data packet. The load balancing device determines a target back-end server recorded in the target session table entry as a scheduling destination device of the target data packet if the target session table entry exists, and determines the scheduling destination device of the target data packet according to a preset scheduling algorithm if the target session table entry does not exist.

In implementation, after obtaining the quintuple information of the target data packet, the load balancing device may first search whether there exists locally a target session table entry corresponding to the quintuple information of the target data packet. If the target session table entry exists, the load balancing device may schedule the target data packet according to the target session table entry. That is, the load balancing device determines the target back-end server recorded in the target session table entry as the scheduling destination device of the target data packet, and meanwhile may update session information in the session table entry. However, if the target session table entry does not exist, the load balancing device may determine the scheduling destination device of the target data packet according to the preset scheduling algorithm, and create a session table entry corresponding to the quintuple information of the target data packet.

Optionally, before scheduling the data packet according to the preset scheduling algorithm, the load balancing device may first determine whether there exists locally a corresponding configuration service. Correspondingly, the determining the scheduling destination device according to the preset scheduling algorithm may be as below. If a target configuration service corresponding to the quintuple information of the target data packet exists in a locally prestored configuration service table, the load balancing device determines the scheduling destination device of the target data packet according to the preset scheduling algorithm of the target configuration service. Otherwise, the load balancing device may discard the target data packet.

In implementation, when the target session table entry corresponding to the quintuple information of the target data packet does not exist locally, the load balancing device may first determine whether the target configuration service corresponding to the quintuple information of the target data packet exists in the locally prestored configuration service table. Specifically, the load balancing device may search the target configuration service according to the destination address, the destination port and the protocol type in the quintuple information. If the target configuration service exists, the load balancing device may determine the scheduling destination device of the target data packet according to the preset scheduling algorithm of the target configuration service, and create the session table entry corresponding to the quintuple information of the target data packet. If the target configuration service does not exist, the load balancing device may directly discard the target data packet.

In Step 203, the load balancing device may forward or respond to the target data packet based on a result of the scheduling.

In implementation, after scheduling the target data packet, the load balancing device may forward the target data packet through a network card of the device or respond to the target data packet based on the result of the scheduling. Specifically, for forwarding the target data packet, the load balancing device may modify a destination IP of the target data packet, and transmit the target data packet to any server in the back-end server cluster via the core switch. For responding to the target data packet, the load balancing device may directly feed back the response packet of the target data packet to a transmitting end of the target data packet via the core switch.

Optionally, the load balancing device may load the data packet into the user mode for processing by binding a protocol stack address to a port of the device. The corresponding processing may be as follows. The load balancing device binds a protocol stack address of the user-mode protocol stack to a packet receiving port, so as to process the data packet received from the packet receiving port through the user-mode protocol stack.

In implementation, the load balancing device may bind the protocol stack address of the user-mode protocol stack to the packet receiving port of the device, and may associate a packet processing procedure with the above protocol stack address. In this way, after receiving a data packet through the packet receiving port, the load balancing device may directly input the data packet into the user-mode protocol stack, and may perform specific processing on the data packet according to the packet processing procedure associated with the protocol stack address of the user-mode protocol stack.

In an embodiment of the present disclosure, the load balancing device receives a target data packet, performs protocol stack processing on the target data packet based on a user-mode protocol stack, and determines a target protocol type of the target data packet; the load balancing device schedules the target data packet through a scheduling function corresponding to the target protocol type registered in a user-mode netfilter framework; and the load balancing device forwards or responds to the target data packet based on the result of the scheduling. In this way, the load balancing device processes the data packet through the user-mode netfilter framework, which reduces the dependence of packet processing procedures on a kernel mode, reduces the processing frequency of packet copy, and thus saves processing performance consumption of the load balancing device. Meanwhile, it is more convenient and simpler to perform the maintenance processes, such as upgrade and replacement, on the processing procedures of the data packet.

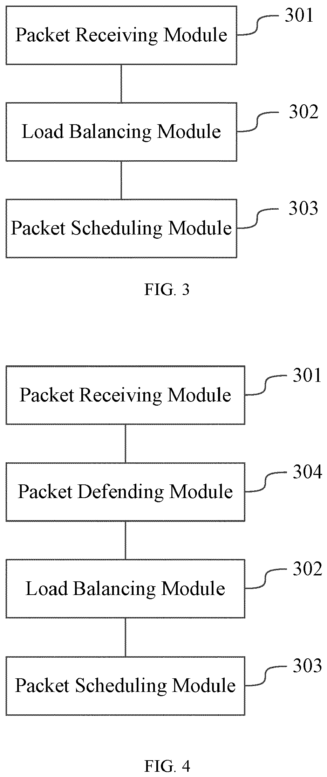

Based on the same technical idea, an embodiment of the present disclosure also provides an apparatus for processing a data packet. As shown in FIG. 3, the apparatus includes:
a packet receiving module 301, configured to receive a target data packet, perform protocol stack processing on the target data packet based on a user-mode protocol stack, and determine a target protocol type of the target data packet;
a load balancing module 302, configured to schedule the target data packet through a scheduling function corresponding to the target protocol type registered in a user-mode netfilter framework; and
a packet scheduling module 303, configured to forward or respond to the target data packet based on a result of the scheduling.

Optionally, as shown in FIG. 4, the apparatus further includes a packet defending module 304, which is configured to:
defend the target data packet through a packet defending function corresponding to the target protocol type registered in the user-mode netfilter framework; and
discard the target data packet when detecting that the target data packet is a malicious packet.

Optionally, the load balancing module 302 is specifically configured to:
schedule the target data packet according to quintuple information of the target data packet when the target protocol type is a transmission control protocol (TCP) or a user datagram protocol (UDP); and
construct a response packet of the target data packet according to a preset pickup rule when the target protocol type is an Internet control message protocol (ICMP).

Optionally, the load balancing module 302 is specifically configured to:
search whether there exists locally a target session table entry corresponding to the quintuple information of the target data packet;
determine a target back-end server recorded in the target session table entry as a scheduling destination device of the target data packet if the target session table entry exists; and
determine the scheduling destination device of the target data packet according to a preset scheduling algorithm if the target session table entry does not exist.

Optionally, the load balancing module 302 is specifically configured to:
if a target configuration service corresponding to the quintuple information of the target data packet exists in a locally prestored configuration service table, determine the scheduling destination device of the target data packet according to the preset scheduling algorithm of the target configuration service, or otherwise discard the target data packet.

Optionally, the load balancing module 302 is further configured to:
when the target protocol type is an address resolution protocol (ARP), resolve the target data packet through an ARP processing function registered in the user-mode netfilter framework, and establish a neighbor table entry and a routing table entry.

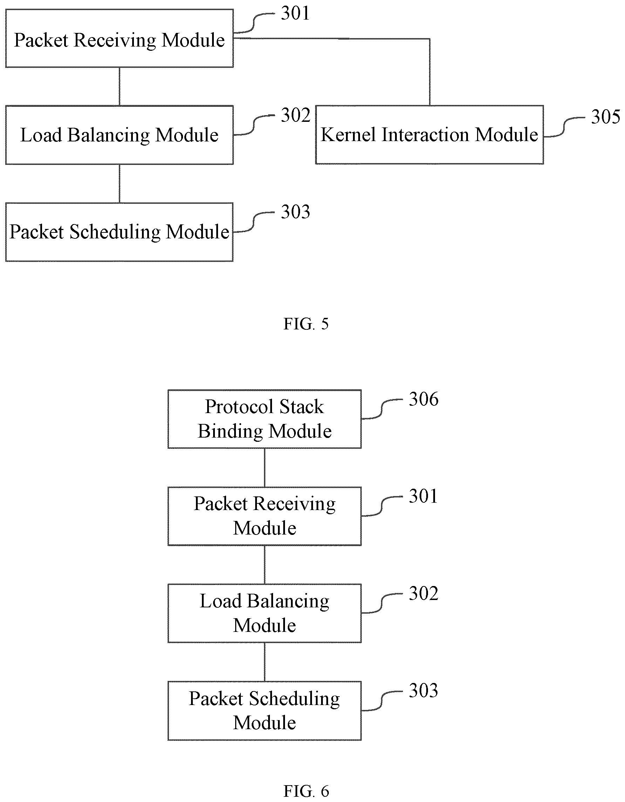

Optionally, as shown in FIG. 5, the apparatus further includes a kernel interaction module 305, which is configured to:
if the target data packet is a non-service packet, input the target data packet into a kernel protocol stack through a kernel interface (KNI) channel based on a sharing memory method in a circular queue.

Optionally, as shown in FIG. 6, the apparatus further includes a protocol stack binding module 306, which is configured to:
bind a protocol stack address of the user-mode protocol stack to a packet receiving port, to process a data packet received from the packet receiving port through the user-mode protocol stack.

In an embodiment of the present disclosure, the load balancing device receives a target data packet, performs protocol stack processing on the target data packet based on a user-mode protocol stack, and determines a target protocol type of the target data packet; the load balancing device schedules the target data packet through a scheduling function corresponding to the target protocol type registered in a user-mode netfilter framework; and the load balancing device forwards or responds to the target data packet based on the result of the scheduling. In this way, the load balancing device implements the processing of the data packet through the user-mode netfilter framework, which reduces dependence of packet processing procedures on a kernel mode, reduces processing frequency of packet copy, and thus saves processing performance consumption for the load balancing device. Meanwhile, it is more convenient and simpler to perform maintenance processes, such as upgrade and replacement, on the processing procedures of the data packet.

It should be noted that, when the apparatus for processing a data packet processes a data packet according to the above embodiment, only the division of the above functional modules is illustrated. In actual applications, the above functions may be allocated to different functional modules for implementation according to actual needs. That is, an internal structure of the apparatus is divided into different functional modules to implement part or all of the functions described above. In addition, the apparatus for processing a data packet and the method for processing a data packet according to the above embodiments belong to the same idea, and specific implementations thereof have been described in detail in the method embodiments, and thus their detailed descriptions are omitted herein.

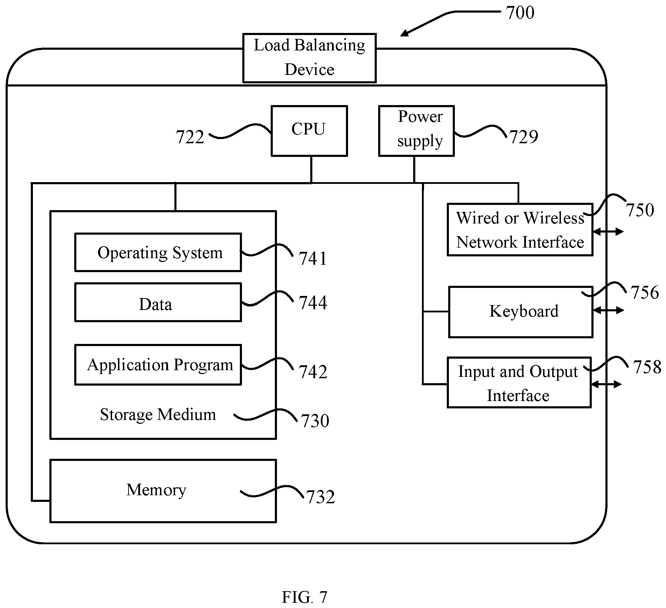

FIG. 7 is a schematic structural diagram of a load balancing device according to an embodiment of the disclosure. The load balancing device 700 may have relatively large differences due to different configurations or performance, and may include one or more central processing units (CPU) 722 (e.g., one or more processors) and a memory 732, one or more storage media 730 storing an application program 742 or data 744 (e.g., one or more mass storage devices). The memory 732 and the storage medium 730 may store temporarily or permanently. The program stored in the storage medium 730 may include one or more modules (not shown in the drawings), each of which may include a series of instruction operations on the load balancing device 700. Still further, the CPU 722 may be configured to communicate with the storage medium 730, and a series of instructions in the storage medium 730 are executed on the load balancing device 700.

The load balancing device 700 may also include one or more power supplies 729, one or more wired or wireless network interfaces 750, one or more input and output interfaces 758, one or more keyboards 756, and/or, one or more operating systems 741 such as Windows Server, Mac OS X, Unix, Linux, FreeBSD and the like.

The load balancing device 700 may also include a memory, and one or more programs stored in the memory, wherein the one or more programs include instructions configured for processing the data packet and are configured to be executed by one or more processors.

It should be understood for those skilled in the art that all or part of steps in the above embodiments may be completed by hardware, or by a related hardware instructed by a program. The program may be stored in a computer readable medium, and the storage medium described as above may be a read-only memory, a magnetic disc, an optical disc or the like.

The foregoing descriptions are merely preferred embodiments of the present disclosure, and are not intended to limit the present disclosure. Any modification, equivalent replacement and improvement made within the spirit and principle of the present disclosure shall fall into the protection scope of the present disclosure.

## Claims

1. A method for processing a data packet, comprising:
receiving, by a load balancing device, a target data packet, performing protocol stack processing on the target data packet based on a user-mode protocol stack, and determining a target protocol type of the target data packet;
scheduling, by the load balancing device, the target data packet through a scheduling function corresponding to the target protocol type registered in a user-mode netfilter framework; and
forwarding or responding to, by the load balancing device, the target data packet based on a result of the scheduling.

2. The method according to claim 1, wherein before scheduling, by the load balancing device, the target data packet through a scheduling function corresponding to the target protocol type registered in a user-mode netfilter framework, the method further comprises:
defending, by the load balancing device, the target data packet through a packet defending function corresponding to the target protocol type registered in the user-mode netfilter framework; and
discarding, by the load balancing device, the target data packet when detecting that the target data packet is a malicious packet.

3. The method according to claim 1, wherein the scheduling the target data packet comprises:
scheduling, by the load balancing device, the target data packet according to quintuple information of the target data packet when the target protocol type is a transmission control protocol (TCP) or a user datagram protocol (UDP); and
constructing, by the load balancing device, a response packet of the target data packet according to a preset pickup rule when the target protocol type is an Internet control message protocol (ICMP).

4. The method according to claim 3, wherein the scheduling, by the load balancing device, the target data packet according to quintuple information of the target data packet comprises:
searching, by the load balancing device, whether there exists locally a target session table entry corresponding to the quintuple information of the target data packet;
determining, by the load balancing device, a target back-end server recorded in the target session table entry as a scheduling destination device of the target data packet when the target session table entry exists; and
determining, by the load balancing device, the scheduling destination device of the target data packet according to a preset scheduling algorithm when the target session table entry does not exist.

5. The method according to claim 4, wherein the determining, by the load balancing device, the scheduling destination device of the target data packet according to a preset scheduling algorithm comprises:
determining, by the load balancing device, the scheduling destination device of the target data packet according to the preset scheduling algorithm of the target configuration service when a target configuration service corresponding to the quintuple information of the target data packet exists in a locally prestored configuration service table, or otherwise discarding the target data packet.

6. The method according to claim 1, wherein after the determining a target protocol type of the target data packet, the method further comprises:
when the target protocol type is an address resolution protocol (ARP), resolving, by the load balancing device, the target data packet through an ARP processing function registered in the user-mode netfilter framework, and establishing a neighbor table entry and a routing table entry.

7. The method according to claim 1, wherein after the determining a target protocol type of the target data packet, the method further comprises:
inputting, by the load balancing device, the target data packet into a kernel protocol stack through a kernel interface (KNI) channel based on a sharing memory method in a circular queue when the target data packet is a non-service packet.

8. The method according to claim 1, further comprising:
binding, by the load balancing device, a protocol stack address of the user-mode protocol stack to a packet receiving port, to process a data packet received from the packet receiving port through the user-mode protocol stack.

9. An apparatus for processing a data packet, comprising:
a packet receiving module, configured to receive a target data packet, perform protocol stack processing on the target data packet based on a user-mode protocol stack, and determine a target protocol type of the target data packet;
a load balancing module, configured to schedule the target data packet through a scheduling function corresponding to the target protocol type registered in a user-mode netfilter framework; and
a packet scheduling module, configured to forward or respond to the target data packet based on a result of the scheduling.

10. The apparatus according to claim 9, further comprising a packet defending module, wherein the packet defending module is configured to:
defend the target data packet through a packet defending function corresponding to the target protocol type registered in the user-mode netfilter framework; and
discard the target data packet when detecting that the target data packet is a malicious packet.

11. The apparatus according to claim 9, wherein the load balancing module is specifically configured to:
schedule the target data packet according to quintuple information of the target data packet when the target protocol type is a transmission control protocol (TCP) or a user datagram protocol (UDP); and
construct a response packet of the target data packet according to a preset pickup rule when the target protocol type is an Internet control message protocol (ICMP).

12. The apparatus according to claim 11, wherein the load balancing module is specifically configured to:
search whether there exists locally a target session table entry corresponding to the quintuple information of the target data packet;
determine a target back-end server recorded in the target session table entry as a scheduling destination device of the target data packet when the target session table entry exists; and
determine the scheduling destination device of the target data packet according to a preset scheduling algorithm when the target session table entry does not exist.

13. The apparatus according to claim 12, wherein the load balancing module is specifically configured to:
when a target configuration service corresponding to the quintuple information of the target data packet exists in a locally prestored configuration service table, determine the scheduling destination device of the target data packet according to the preset scheduling algorithm of the target configuration service, or otherwise discard the target data packet.

14. The apparatus according to claim 9, wherein the load balancing module is further configured to:
when the target protocol type is an address resolution protocol (ARP), resolve the target data packet through an ARP processing function registered in the user-mode netfilter framework, and establish a neighbor table entry and a routing table entry.

15. The apparatus according to claim 10, further comprising a kernel interaction module, wherein the kernel interaction module is configured to:
input the target data packet into a kernel protocol stack through a kernel interface (KNI) channel based on a sharing memory method in a circular queue when the target data packet is a non-service packet.

16. The apparatus according to claim 9, further comprising a protocol stack binding module, wherein the protocol stack binding module is configured to:
bind a protocol stack address of the user-mode protocol stack to a packet receiving port, to process a data packet received from the packet receiving port through the user-mode protocol stack.

17. A load balancing device, comprising a processor and a memory, wherein the memory stores at least one instruction, at least one program, and a code set or an instruction set, and the at least one instruction, the at least one program, and the code set or instruction set are loaded and executed by the processor to implement the method for processing a data packet according to any one of claims 1 to 8.

18. A computer-readable storage medium, wherein the storage medium stores at least one instruction, at least one program, a code set or an instruction set, and the at least one instruction, the at least one program, the code set, or the instruction set is loaded and executed by a processor to implement the method for processing a data packet according to any one of claims 1 to 8.
